# EUROPEAN PATENT SPECIFICATION

(11) **EP 0 762 611 B1**
(45) Date of publication and mention of the grant of the patent: **20.09.2000**
(21) Application number: 96118358.9
(22) Date of filing: 07.10.1993
(51) Int. Cl.: H02K 7/08, H02K 5/173, F16C 19/18, G11B 19/20

(54) **Compound ball bearing**
Compoundkugellager
Roulement à billes composé

(30) Priority: 07.10.1992 JP 29385892; 09.11.1992 JP 32364692
(43) Date of publication of application: 12.03.1997
(62) Divisional of application: 93307965.9
(73) Proprietor: MINEBEA KABUSHIKI-KAISHA, Kitasaku-gun, Nagano-ken (JP)
(72) Inventor: Obara, Rikuro, c/o Minebea K.K., Kitasaku-gun, Nagano-ken (JP); Tatsuno, Katashi, c/o Minebea K.K., Kitasaku-gun, Nagano-ken (JP)
(74) Representative: Johnstone, Douglas Ian

(56) References cited:
- DE-A- 3 540 363
- US-A- 4 713 704
- US-A- 4 760 298
- US-A- 4 943 748
- US-A- 5 013 947
- US-A- 5 045 738
- PATENT ABSTRACTS OF JAPAN vol. 9, no. 182 (P-376) < 1905> 27 July 1985 & JP 60 052 953 A (HITACHI LTD) 26 March 1985

## Description

This invention relates to ball-bearings mainly used for office automation (OA) apparatus motors and components thereof eg in computers.

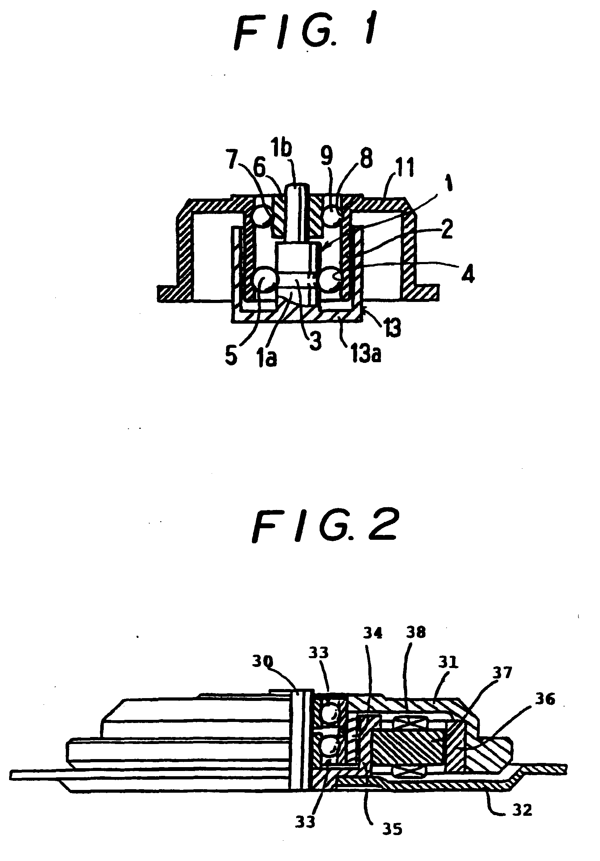

A usual spindle motor used for OA apparatuses, as shown in Figure 2 comprises a spindle 30, a rotor hub 31 and a base flange 32. The spindle is supported by a ball-bearing 33 which comprises an inner and an outer ring provided in a sleeve 34. The motor further comprises a yoke 37 supported on the base flange 32 by means of a yoke holder 35 and supporting a coil means 38. A permanent magnet 36 is connected for rotation with the hub 31. These components are individually formed as separate members.

A prior art bearing assembly for OA apparatus (on which the pre-characterising of the single claim is based) is described in Patent US 5,045,738. The bearing assembly (depicted in Figure 10 of US 5,045,738) includes a central parallel sided spindle with a pair of spaced outer races formed in its outer surface around which two rows of balls run which support a sleeve surrounding the spindle having two inner races formed in its inner surface. A separately fabricated motor hub is connected to one end of and surrounds the sleeve and the spindle is connected at its lower end to a separately fabricated motor base flange.

A further prior art bearing assembly for OA apparatus is described in Patent US 4,713,704, in which a separate motor base flange is connected to a sleeve inside which two rows of balls run which support a stepped diameter spindle. One row of balls engages a race on a larger diameter portion of the spindle and the other row of balls engages a race on a ring fitted to a smaller diameter portion of the spindle. A hub, which surrounds the sleeve, is connected to an upper end of the spindle.

Since the prior art motor components are thus independent parts, the motor has a large number of components. Besides, it is necessary to assemble these components, leading to a large number of steps involved in the motor's manufacture and thus to a high cost of manufacture.

Further, in the prior art ball-bearing structure, it is not easy to obtain the vibration accuracy of the spindle, and it is difficult to expect substantial improvement of vibration accuracy. Accordingly avoidance of vibration in prior art spindle motors is difficult to achieve.

An object of the invention is to reduce the number of components and number of steps of assembling apparatus such as that described above, thus permitting reduction of the cost of manufacture.

Another object of the invention is to provide a compound ball-bearing, in which an inner ring can be secured in a proper position by facilitating pre-loading or a press fitting technique, thus obtaining improved spindle vibration accuracy, and reducing spindle motor vibration.

According to the invention there is provided a compound ball bearing comprising a bearing assembly including a spindle, a sleeve surrounding said spindle having first and second inner races, a first row of balls between said first inner race and a first outer race in the spindle, a second row of balls between said second inner race and said spindle and a motor hub comprising a radial portion projecting outwardly from an outer periphery of one end of said sleeve and a cylindrical portion extending from an outer edge of said radial portion and surrounding said sleeve,
characterised in that:
(a) said spindle is a stepped spindle having a larger diameter portion and a smaller diameter portion;
(b) said first outer race is in said larger diameter portion of said spindle;
(c) a second outer race around which said second row of balls runs is formed in an inner ring fitted on said smaller diameter portion of said spindle;
(d) said spindle is integrally formed in one piece with a base flange of a motor; and
(e) said sleeve is integrally formed in one piece with said motor hub.

The invention will now be described by way of example only with reference to the accompanying drawings in which:
Figure 1 is a sectional view showing an embodiment of the invention;
Figure 2 is a view, partly in section, showing a typical prior art spindle motor.

Figure 1 shows an embodiment of the compound ball-bearing according to the invention. Referring to Figure 1 there is shown a double-row ball bearing, in which a spindle 1 and a sleeve 2 corresponding thereto as an outer ring form a bearing body for retaining bearing balls 5 and 9 provided in two rows.

The spindle 1 is stepped and has a larger and a smaller diameter portion 1a and 1b respectively. The larger diameter portion 1a has an outer race 3 for a first row of balls 5, while the sleeve 2 has an inner race 4 corresponding to the outer race 3 of the spindle. Balls 5 in the first row are provided between the two races 3 and 4. On the smaller diameter portion 1b of the spindle, an inner ring 6 is fitted. A second row of balls 9 is provided between an outer race 7 formed in the inner ring and a corresponding inner race 8 formed in the sleeve 2.

A yoke holder 13 of a motor with a bottom flange 13a and surrounding a sleeve is formed by moulding such that an inner surface of its bottom 13a is integral with a larger diameter portion 1a of the spindle. The hub 11 is moulded as a one-piece moulding with the sleeve 2.

The inner ring 6 which has been loosely fitted on the spindle, is pre-loaded and secured with an adhesive to the spindle.

Each ball is suitably made of a high carbon chromium bearing steel.

According to the invention, the sleeve and spindle or shaft are respectively moulded as a one-piece moulding with the rotor hub and base flange of the motor. Thus, unlike the prior art bearing structure, in which all of the hub, the flange, the yoke holder or the like are separate from the bearing body, it is possible to readily assemble parts when manufacturing a motor. Efficient assembling is obtainable by using machines thus reducing the cost of motor manufacture. These merits are highly beneficial in industrial production. Furthermore when parts such as a hub, a flange or a yoke holder, are moulded as a one-piece moulding with the sleeve or spindle constituting the bearing body, the motor manufacture or motor component assembling can be carried out without need of centring of the spindle with respect to any of the components noted above. Thus it is possible to provide a motor or the like, which is free from shaft vibration and has high accuracy of rotation.

Further the inner ring can be readily pre-loaded, for installation on the appropriate part, by applying a pressure to it in the axial direction. The inner ring can thus be secured in a proper position to obtain a highly accurate ball-bearing.

## Claims

1. A compound ball bearing comprising a bearing assembly including a spindle (1), a sleeve (2) surrounding said spindle (1) having first and second inner races (4,8), a first row of balls (5) between said first inner race (4) and a first outer race (3) in the spindle (1), a second row of balls (9) between said second inner race (8) and said spindle (1) and a motor hub (11) comprising a radial portion projecting outwardly from an outer periphery of one end of said sleeve (2) and a cylindrical portion extending from an outer edge of said radial portion and surrounding said sleeve (2), characterised in that:
(a) said spindle (1) is a stepped spindle having a larger diameter portion (1a) and a smaller diameter portion (1b);
(b) said first outer race (3) is in said larger diameter portion (1a) of said spindle;
(c) a second outer race (7) around which said second row of balls (9) runs is formed in an inner ring (6) fitted on said smaller diameter portion (1b) of said spindle;
(d) said spindle is integrally formed in one piece with a base flange (13a) of a motor; and
(e) said sleeve (2) is integrally formed in one piece with said motor hub (11).

## Patentansprüche

1. Kombiniertes Kugellager, umfassend ein Lagersystem, das eine Spindel (1) aufweist, eine Hülse (2), die die genannte Spindel (1) umgibt und in der eine erste und eine zweite innere Laufbahn (4, 8) ausgebildet sind, eine erste Reihe Kugeln (5) zwischen der genannten ersten inneren Laufbahn (4) und einer ersten äußeren Laufbahn (3) in der Spindel, eine zweite Reihe Kugeln (9) zwischen der genannten zweiten inneren Laufbahn (8) und der genannten Spindel (1), und eine Motornabe (11), die einen radialen Abschnitt, der von einer äußeren Peripherie eines Endes der genannten Hülse (2) nach außen vorsteht, und einen zylindrischen Abschnitt aufweist, der sich von einem äußeren Rand des genannten radialen Abschnitts erstreckt und die genannte Hülse (2) umgibt, dadurch gekennzeichnet, daß:
(a) die genannte Spindel (1) eine gestufte Spindel mit einem breiteren Abschnitt (1a) und einem schmäleren Abschnitt (1b) ist,
(b) die genannte erste äußere Laufbahn (3) sich in dem genannten breiteren Abschnitt (1a) der genannten Spindel befindet;
(c) eine zweite äußere Laufbahn (7), um die die genannte zweite Reihe Kugeln (9) verläuft, in einem inneren Ring (6) ausgebildet ist, der an dem genannten schmäleren Abschnitt (1b) der genannten Spindel vorgesehen ist;
(d) die genannte Spindel einstückig mit einem Basisflansch (13a) eines Motors ausgebildet ist; und
(e) die genannte Hülse (2) einstückig mit der genannten Motornabe (11) ausgebildet ist.

## Revendications

1. Un roulement à billes composite englobant un ensemble de roulement qui inclut un axe (1), une douille (2) qui entoure ledit axe (1) ayant une première et une deuxième bagues de roulement intérieures (4,8), une première rangée de billes (5) entre ladite première bague intérieure (4) et une première bague extérieure (3) dans l'axe (1), une seconde rangée de billes (9) entre ladite deuxième bague intérieure (8) et ledit axe (1) et un moyeu de moteur (11) qui englobe une partie radiale en saillie vers l'extérieur depuis une périphérie externe d'une extrémité de ladite douille (2) et une partie cylindrique qui s'étend depuis un bord extérieur de ladite partie radiale et qui entoure ladite douille (2), caractérisé en ce que :
(a) ledit axe (1) est un axe à gradins ayant une partie à plus grand diamètre (1a) et une partie à plus petit diamètre (1b) ;
(b) ladite première bague extérieure (3) est dans ladite partie à diamètre plus grand (1a) dudit axe ;
(c) une deuxième bague extérieure (7) autour de laquelle ladite seconde rangée de billes (9) roule est formée dans un anneau intérieur (6) adapté sur ladite partie à plus petit diamètre (1b) dudit axe ;
(d) ledit axe est formé intégralement d'une seule pièce avec une bride d'embase (13a) d'un moteur ; et
(e) ladite douille (2) est formée intégralement d'une seule pièce avec ledit moyeu de moteur (11).
